# EUROPEAN PATENT SPECIFICATION

(11) **EP 4 512 363 B1**
(45) Date of publication and mention of the grant of the patent: **08.04.2026**
(21) Application number: 23192540.5
(22) Date of filing: 22.08.2023
(51) Int. Cl.: A61C 7/00, A61C 7/08, A61C 13/34

(54) **PROCESS AND SYSTEM FOR PRODUCING INDIVIDUALIZED ORTHODONTIC ALIGNER SETS**
VERFAHREN UND SYSTEM ZUR HERSTELLUNG INDIVIDUALISIERTER ORTHODODONTISCHER ALIGNERSETS
PROCÉDÉ ET SYSTÈME DE PRODUCTION D'ENSEMBLES D'ALIGNEURS ORTHODONTIQUES INDIVIDUALISÉS

(43) Date of publication of application: 26.02.2025
(73) Proprietor: Emunel Chova GmbH, 67071 Ludwigshafen (DE)
(72) Inventor: HER, Seung-Min, 67071 Ludwigshafen (DE)
(74) Representative: Michalski Hüttermann & Partner Patentanwälte mbB

(56) References cited:
- US-A1- 2020 261 186
- US-A1- 2021 178 639

## Description

The present invention relates to a process and a system for the production of an orthodontic aligner set.

Orthodontics is the practice of manipulating teeth positions to correct malocclusions between teeth positions in the upper and lower dental arches. In the past the treatment of such malocclusions includes the use of orthodontic appliances that affects corrective mechanical forces to the teeth. In the course of the treatment, these mechanical forces drive the teeth to move into their orthodontically correct orientations. One known possibility of applying such corrective forces is through the use of "braces." These are often referred to as orthodontic brackets. Treatment using standard brackets includes attaching a bracket to each of the teeth being treated. These brackets are then coupled using ligatures to an archwire. The archwire is resilient and exerts the needed mechanical forces to the teeth via the brackets. Alternatively, to the attachment of braces, which remain adhered to the patient's teeth during the entire treatment, dentists may utilize orthodontic appliances referred to as dental aligners, or in a short version aligner. Aligners are removable dental devices usually supplied in a series of different structures, wherein each appliance is able to incrementally reposition the patient's teeth from an initial through intermediate orientations to their orthodontically correct, aesthetic end positions. Aligners are usually transparent and, therefore, "invisible", and easy to handle. Nevertheless, in order to keep the production process efficient and failure prove it has to be taken into account, that several different aligners comprising different teeth configurations have to be processed for a single patient. Unfortunately, the situation gets more complicated in cases, wherein besides the teeth configuration also further aligner characteristics has to be adapted during the production process. Such moving product requirements are very difficult to implement in the existing aligner production processes and, hence, are prone to errors. Different processes for the production of dental aligner are also described in the patent literature.

EP 2 467 088 A1, for instance, describes a method of fabricating orthodontic aligner trays comprising: acquiring an original digital model of a patient's teeth; segmenting the teeth represented by the digital model; repositioning at least one of the teeth into correct alignment to create a final teeth model, the final teeth model representing a final teeth position; superimposing the final teeth model with the original digital model to create a digital overlay model, the overlay model comprising a starting point defined by the original digital model and an end point defined by the final teeth model; fabricating at least one aligner tray based on the overlay model to define a tooth-receiving compartment within each aligner; and inserting at least one force appliance into the at least one aligner tray, the at least one force appliance positioned within the tooth-receiving compartment to exert a selected force upon selected teeth.

Another patent document, US 2006 093 982 A1 discloses a method for producing a physical dental aligner, comprising: producing a digital dental aligner model suitable for CNC based manufacturing based on the digital dental arch model; segmenting the digital dental aligner model into a plurality manufacturable digital components; producing aligner components using Computer Numerical Control (CNC) based manufacturing in accordance with the digital aligner components; and assembling the aligner components to form the physical dental aligner.

WO 2021 098 759 A1 describes a method for producing dental aligners. The method includes scanning a patient's teeth to produce a 3D printable file, adjusting the 3D printable file according to a treatment plan, printing a dental aligner mold based on the adjusted 3D printable file and producing dental aligners from the dental aligner mold.

Further methods and systems for producing dental aligners are discussed in US 2021/178639 A1 and US 2020/261186 Al.

Such solutions known from the prior art may offer further potential for improvement. This relates in particular to the efficiency in the production process of a series of different aligners and in the possibility to safely handle different aligner materials.

It is therefore the task of the present invention to at least partially overcome the disadvantages known from the prior art. In particular, it is the task of the present invention to provide an aligner production process which allows to safely and efficiently use different aligner materials. Therefore, as a side effect, the physical characteristics of aligner sets are improved, by adapting or tailoring the aligner material to the patient's specific needs.

The task is solved by the features of independent claims 1 and 9, directed to the process according to the invention as well as the system according to the invention. Preferred embodiments of the invention are indicated in the dependent claims, in the description or in the figures.

According to the invention, the problem is solved by a process for the production of an orthodontic aligner set comprising at least two aligners of different aligner shell materials, wherein the process at least comprises the production steps of:
a) providing at least two different physical dental models, wherein the dental models comprise a base plate and a teeth configuration thereon, wherein the teeth configuration defines at least a part of a patients present or future teeth configuration and each model comprises an individual identifier, wherein the identifier comprises information at least encoding for the specific patient and the aligner shell material;
b) placing at least one of the physical dental models provided in step a) in a deep draw chamber.
c) Reading the individual identifier on the physical dental model and presenting at least the encoded information with respect to the aligner shell material, wherein the reading is performed after step a) and before step d);
d) Selecting the specific aligner shell material as represented by the encoded information in process step c);
e) Placing the selected aligner shell material over the physical dental model, heating of the aligner shell material, wherein the heating is performed prior, during or after placing of the selected aligner shell material, and deep drawing the aligner shell material to the physical dental model in order to produce a single orthodontic aligner;
f) Removing the dental model and the orthodontic aligner from the deep draw chamber, wherein process step f) includes the attachment of an individual tag on the orthodontic aligner after deep drawing and prior to removing the orthodontic aligner from the deep draw chamber, wherein the tag is an identifier in the form of a RFID-code, loosely attached to the aligner;
g) Repeating the process steps b) to f) until each physical dental model of the set is processed.

Surprisingly, it has been found that above-described process is very suitable for a safe and efficient handling of different aligner materials. Usually, only a single aligner material is used in the processing of aligners for a single patient and the aligner material in the form of a polymer sheet or polymer laminate is manually placed in a deep draw machine and deep drawn over a patient's specific dental model. Based on the fact that there is no variance in the sheet material in the course of the patient's specific production process, such process is safe and reliable. Nevertheless, in case that different sheet materials are necessary in the overall treatment plan as a function of the treatment stage, such handling is laborious and prone to errors, because the right aligner material has to be chosen as a function of the patient, the dental model and in certain cases also as a function of the application time for the same dental model. Errors are very difficult to detect based on similar appearance of different aligner sheets materials, and, therefore, process means must be implemented, excluding failures in the selection and application of aligner sheet materials on treatment stage specific dental models.

Only such adapted processes enable the efficient production of a complete aligner set, without the need for producing only single aligners of the same treatment stage. Surprisingly it has also been found, that the adaption of the aligner shell material as a function of the dental treatment plan stage enables a more efficient and faster teeth movement. This in turn can be used to provide treatment plans with less, but more efficient aligner shells.

The inventive process is a process for the production of an orthodontic aligner set comprising at least two aligners of different aligner shell materials. Processing of the dental aligners usually involves thermoforming plastic sheets onto a model of a patient's teeth configuration. The model can be built directly from a virtual model, such as a stereolithography (SLA) machine or other rapid prototyping machine or can be cut from bulk material via CNC machining. Within a treatment plan a series of positive models are built, wherein each mold corresponds to a specific position of a future patient's teeth configuration and is a three-dimensional reproduction of the patient's teeth at a particular target orientation during treatment. In order to achieve a sufficient correction of the patient's teeth usually more than one model is required. The treatment plan can be based on different phases, wherein in each phase a different task with respect to the teeth movements is performed. Such segmentation of the treatment plan is helpful and may reduce the overall treatment time. As a function of the treatment phase different aligner materials may be used, in order to adapt the aligner materials with respect to the task in the treatment phase. Therefore, different aligner from different materials have to be used. Preferably, the aligner set, comprising one or more different aligner, preferably from different aligner shell material, may comprise more than 2 and less than 10, preferably, more than 5 and less than 15 and more preferably more than 10 and less than 20 individual aligners.

The process step a) includes providing at least two different physical dental models, wherein the dental models comprise a base plate and a teeth configuration thereon, wherein the teeth configuration defines at least a part of a patients present or future teeth configuration and each model comprises an individual identifier, wherein the identifier comprises information at least encoding for the specific patient and the aligner shell material. The dental models are physical models, wherein the model as such can be processed by any means according to state of the art as explained above. The dental model represents a desired future teeth configuration of a patient, and the model may represent the teeth configuration of the upper, lower or both jaws. In addition, the model does not have to represent the full dental arch. It is also possible that only some teeth or a specific part of the dental arch is represented. The dental model can be based on a digital model that is created by treatment planning software. Within the planning software teeth are digitally moved in certain stages or movement characteristics. According to the digital planning, the specific steps/ models and movements can be tagged manually or automatically with a specific foil for this model for the production of a specific aligner of a specific material. The physical model comprises at least a base plate or base part, wherein on the base plate the specific teeth configuration is aligned. In addition, besides the teeth also apart of the gum line or other dental or oral features may be represented by the model or the base plate. The identifier may be present in the form of a visible, haptically or electronically accessible identifier. Therefore, the identifier can present the stored information in different ways. The read-out can be based on visible, haptically or electronic means. The identifier may be used to store several different information, wherein at least one piece of information is usable for the identification of the patient. At least one other piece of information is directed to the specific aligner material, which has to be used on this model. It is also possible, that the information includes that for this model different materials has to be used, wherein this information than also includes the production order of the usable sheet material. Further information that may have impact on the material characteristics of the sheet in the production process and which can be encoded in the identifier are e.g. heating time, heating temperature, cooling time, machine type, sheet temperature before thermoforming or foil surface temperature surface assessed by a machine temperature detector.

The process step b) includes placing at least one of the physical dental models provided in step a) in a deep draw chamber. Aligner shells are processed by deep drawing an aligner shell material over the physical model. In order to mold the shell material to the model the model is placed in a deep draw chamber. The chamber is able to provide the necessary process conditions for deep drawing. This usually includes the application of a vacuum or reduced pressure and or the heating of the chamber environment. In addition, the chamber also includes means for performing and controlling the deep draw process with respect to the process time and heating or reduced pressure ramps.

The process step c) includes reading the individual identifier on the physical dental model and presenting at least the encoded information with respect to the aligner shell material, wherein the reading is performed after step a) and before step d). The reading of the encoded information with respect to the individual identifier may be performed before the physical model is placed in the deep draw chamber. It is also possible, that the information is assessed during the placing of the model into the chamber or after the model has been placed into the chamber. The reading may be performed as a function of the used identifier, i.e., the information can be accessed visually, electronically or haptically. Based on the different ways of accessing the information, the reading may for instance be performed electronically, e.g. reading of RFID-chip information by a RFID-reader. The reading can also be performed visually by a camera or scanner. The presentation of the information accessed from the identifier may include the output of the information on a screen. Alternatively, the presentation may include the input of the information into a computer system, wherein the information can be further processed.

The process step d) includes selecting the specific aligner shell material as represented by the encoded information in process step c). The specified aligner shell material is selected in this step from a multitude of different aligner shell materials. The specified aligner shell material for this model can be manually taken out of a storage. In this case, the operator is able to choose the right material, because the right material for this model is represented by the previous process step. It is also possible, that the material is automatically removed from a material specific storage, e.g., by a robot. It is also feasible, that a mix of manual automatic substeps is applied in this process step.

The process step e) includes placing the selected aligner shell material over the physical dental model, heating of the aligner shell material, wherein the heating is performed prior, during or after placing of the selected aligner shell material, and deep drawing the aligner shell material to the physical dental model in order to produce a single orthodontic aligner. Within this step the aligner shell material is physically prepared for the deep drawing process. This preparation includes the warming or heating of the aligner shell foil material. The heating preferably is performed within the chamber, nevertheless, it is also possible to place preheated foil material in the chamber and to immediately deep draw the already heated sheets. Preferably the selected aligner shell material is heated, placed over the physical dental model and thermoformed over the model.

The process step f) includes removing the dental model and the orthodontic aligner from the deep draw chamber. After the aligner shell material has been formed to the contour of the model the (nearly) finalized aligner is removed from the model and from the chamber. The aligner may be subject to a post processing, e.g., in the form of edge trimming, cleaning, polishing or similar steps, before the final aligner ready to be applied is achieved.

The process step g) includes repeating the process steps b) to f) until each physical dental model of the set is processed. In order to adapt the aligner shell material to specific stages in the course of an orthodontic treatment, it has been found that several aligners of different shell material provide better orthodontic results compared to mono-materials, wherein only one shell material is used for treatment. The overall aligner production process can be repeated several times, wherein for each model in the desired treatment stage different shell materials can be used. The different shell materials result in different physical properties of the aligner. The physical properties can be adapted to better fit the desired needs in the specific process stage. By repetition of the process, the aligner shell material can be varied freely, according to the stored information, and complete sets for a single patient can consecutively or parallel be processed. This enables a lean and efficient processing. Preferably, the process can be performed more than five times, preferably more than ten times, in order to process a complete set for a complete dental treatment at once.

In a preferred embodiment of the process, the individual identifier can be placed below the bottom plate of the physical dental model. This specific location of the identifier enables a fast and easy processing in the course of the production of the dental model and especially in the course of accessing the identifier from the model in the surrounding of a deep draw machine. The upper parts of the model have to be clean and are in direct contact with the shell material. Therefore, the reading time is extended and the deep draw chamber dimensions can be kept smaller in case that the identifier is placed below and not above the model. The latter is especially true, because the necessary means for the reading can be integrated in the bottom of the deep draw machine, rendering the airtight deep draw chamber as small as possible. Such placing comprises also the advantage, that after the deep drawing process, the identifier can be used for further scanning for post processing processes like automated cutting. In this case, the identifier may also contain the cutting line for a laser or a CNC machine. The identifier remains viewable/readable for the post processing steps, because no foil is present over the identifier.

In a preferred embodiment of the process, the individual identifier further encodes for one or more deep draw process parameters selected from the group consisting of heating temperature, heating time, applied pressure, process time under vacuum, post processing or a combination thereof. As a function of the used aligner material it might also be helpful to automatically adapt the individual deep draw process as a function of the used material. In this case also all or some the specific deep-draw parameter can be stored in the individual identifier and read our, before start of the deep-draw process. Such a streamlined procedure might reduce the risk of individual errors during processing. Besides to store only single pressure and/or temperature values it might be helpful to include more complex processing parameter set, e.g., with respect to the time dependent temperature and/or pressure profiles. In addition, further post processing steps, like for instance the cleaning or cutting of the aligner, can be encoded.

In a preferred embodiment of the process, in process step e) the selected aligner shell material is manually or automatically selected and placed on top of the physical dental model. It has been found useful, that the shell material in the form of polymer foils is either purely manually or purely automatically selected and placed over the model. Such strict distinctions in manual or automatic avoids a mix up and results in an easy and lean process.

In a preferred embodiment of the process, the selected aligner shell material is placed in process step e) automatically on the physical dental model, wherein in process step d) the selection of the aligner shell material includes the transfer of the specific aligner shell material from a material specific storage according to the presented encoded aligner shell material information to the deep draw chamber and onto the physical dental model by a robotic arm. The automatic selection and the automatic process of the aligner material to the deep draw chambers has been found very useful. This is especially the true in cases, wherein more than one deep draw chamber is operated at the same time. Due to the coherent processing, it is not possible that the wrong material is placed on the wrong model. In a further preferred embodiment, it is also possible that the robot arm comprises means for assessing the identifier and cross check in the vicinity of the model, that the right aligner foil is transferred to the right model.

In a preferred embodiment of the process, process step f) includes the attachment of an individual tag on the orthodontic aligner after deep drawing and prior to removing the orthodontic aligner from the deep drawn chamber. For the further processing of the produced aligner at has been found useful, that a further identifier is attached to the aligner itself. This identifier or tag is applied to the aligner and may further indicate the patient or the aligner application order. The tag may be in the form of a printed code, e.g. a bar- or QR-code. Furthermore, it is possible that the tag is an identifier in the form of a RFID-code, loosely attached to the aligner.

In a preferred embodiment of the process, the deep draw chamber comprises at least two individually controllable deep draw stations, wherein the process steps b) to f) are performed simultaneously on different physical dental models and the same or different aligner shell material placed in process step e). Based on the fact that several different sheet materials can be safely processed in the inventive process it has been found favourable, that more than one deep draw station is present in the deep draw chamber. The deep draw station may provide the same functionality compared to the deep draw chamber, but may provide the possibility to be independently controlled with respect to certain process parameters, e.g. the temperature or the pressure. This set-up enables the simultaneous but independent processing of very different aligner materials at the same location.

In a preferred embodiment of the process, the simultaneous processing of different dental models is performed automatically comprising at least an automatic selection and transfer of the specific aligner shell material from a material specific storage according to the presented encoded aligner shell material information to the deep drawn place and onto the different physical dental models by a robotic arm. The process can be performed in a most efficient and safe way by performing the necessary material selection and placing steps in an automatic way. Especially, a robotic arm coupled to a computer is suitable for performing the task in a reproducible and reliable way.

In a preferred embodiment of the process, at least five different physical dental models are processed and wherein for each physical dental model different aligner shell materials are processed in process steps d) to f). The inventive process is especially adapted to process different aligner shell materials, wherein in the different stages of the dental treatment different aligners are used. Based on the different foils used for forming the aligners in the different stages, different physical parameter of the aligner are achieved, wherein the physical characteristics of the aligner can be selected to suit the needs in the specific phase best. For instance, it is possible, that the treatment phase of rotating single tooth is best served by an aligner material that is different compared to an aligner which is used in a phase of adapting teeth height. For a faster and more reliable treatment is has been found suitable, that at least 5 different models are processed. It is further possible, that at least 7, and further preferred at least 10 different models are processed.

Further a system for the production of an aligner set comprising one or more orthodontic aligner is within the scope of the invention, wherein the system at least comprises:
i) a physical dental model assembling unit, wherein the model assembling unit is adapted to consecutively assemble one or more dental models at least each comprising a base plate and a teeth configuration thereon;
ii) an identification unit, wherein the identification unit is adapted to apply at least one identifier on the physical dental model, wherein the identifier comprises information at least encoding for a specific patient and an aligner shell material and wherein the identification unit is adapted to apply at least one identifier below the baseplate;
iii) a deep draw chamber, wherein the deep draw chamber is adapted to assess the identifier on the on the physical dental model, to present the encoded aligner shell material gained from the identifier and to deep draw the aligner shell material at a deep draw station over the physical dental model in order to obtain an orthodontic aligner, wherein the deep draw chamber comprises a camera unit and the camera unit is adapted to a assess the identifier from below the baseplate of the physical dental model and to present at least information about the aligner shell material;
iv) a disassembling unit, adapted to disassemble the orthodontic aligner from the physical dental model. Surprisingly, it has been found that above-described system is able to reliably process a large amount of aligners in a short period of time. It is essential to the system, that the system can securely handle different aligner shell materials. This handling is inter alia guaranteed by the features ii) and iii), wherein each dental model provides the right identification at least with respect to the material to be used. For the further advantages of the system, it is explicitly referred to the advantages of the inventive process.

The inventive system is a system for the production of an aligner set comprising one or more orthodontic aligner. The system is especially adapted to produce different aligners, wherein the difference between the different aligners is not only based on different teeth configuration, but manifests also in different aligner shell materials. The safe and reliable processing of the different shell materials is the core of the described system. An aligner set may comprise up to 5, preferably up to 10, preferably up to 20 different aligners. Preferably at least 5 different aligner shell materials are used for processing the aligners.

The system comprises i) a physical dental model assembling unit, wherein the model assembling unit is adapted to consecutively assemble one or more dental models at least each comprising a base plate and a teeth configuration thereon. The assembly unit may be a standard assembly unit as known by the skilled artisan. It is possible to process and fix different teeth on a baseplate. Furthermore, it is possible, that the assembly unit processes the different models by a 3D additive manufacturing process, wherein the tooth structures are added by a 3D-printing process. In addition, it is possible to generate the dental structures from a block by a milling procedure. The base-plate is a more or less flat 2-D structure, whereon the oral structures are placed on. It is further possible, that the baseplate comprises or mimic features from the oral cavity of the patient.

The system comprises ii) an identification unit, wherein the identification unit is adapted to apply at least one identifier on the physical dental model, wherein the identifier comprises information at least encoding for a specific patient and an aligner shell material. The identification unit may for instance be a printer, wherein the printer applies an ink on a surface of the model. It is further possible, that the identification unit applies a visual identification based on a laser, wherein the laser alters visibly the surface of the model. Alternatively, the identification unit may apply an electronic readable chip, like an RFID-chip to the surface of the model. The visual, haptically or electric identifier comprises information, for instance in the form of a bar-code, a QR-code or an RFID electric code, at least with respect to the specific patient and with respect to the shell material, i.e., the polymer foil, which has to be used in processing the aligner for this model. It is also possible, that the identifier comprises the code that this model has to be processed several times.

The system comprises iii) a deep draw chamber, wherein the deep draw chamber is adapted to assess the identifier on the on the physical dental model, to present the encoded aligner shell material gained from the identifier and to deep draw the aligner shell material at a deep draw station over the physical dental model in order to obtain an orthodontic aligner. The deep draw chamber may comprise a camera, a bar-code reader, a RFID-reader or any other means which is able to extract the encoded information and provide the information to an operator or a computer system. Furthermore, the deep draw chamber comprises additional standard features of deep drawing units, for instance a heater, a vacuum unit and a control unit, adapted to control the execution of the temperature and pressure programs.

The system comprises iv) a disassembling unit, adapted to disassemble the orthodontic aligner from the physical dental model. After deep drawing of a polymeric sheet over the dental model it is necessary to separate the model and the aligner. Such unit may be equipped to peel or lift the aligner from the model. Furthermore, this unit may also be suitable to perform certain tasks of post-processing, like, for instance, the trimming of the edges, a final cutting of unnecessary aligner materials or for further stamping or providing another identifier on the top or in the final aligner.

The identification unit of the system is adapted to apply at least one identifier below the baseplate. The positioning of the identifier below the baseplate results in a faster processing of the model and is further advantageous with respect to the readout of the identifier. Especially, the design of the deep draw chamber can be much more compact compared to identifier provided on the upper parts of the model. The identifier can be applied to the baseplate side, whereon no tooth or oral structures are present. This baseplate part is not relevant with respect to any deep drawing and is not in contact with any aligner shell material. The read out of such identifier can be much faster and easier compared to an identifier applied to the top of the model.

The deep draw chamber of the system comprises a camera unit and the camera unit is adapted to a assess the identifier from below the baseplate of the physical dental model and to present at least information about the aligner shell material. The assessment of the identifier from below through the bottom of the deep draw chamber enables the integration of the necessary means in the bottom of the machine. This leaves the inner chamber of the deep draw chamber free of any additional parts. This might easy the handling of the aligner shell material because more space is available for manoeuvring the sheets in the unit. In a preferred embodiment of the system, the system comprises a computer unit and an automatic aligner shell material feeding unit, wherein the computer unit is adapted to receive the information about the aligner shell material from the camera unit, wherein the automatic aligner shell material feeding unit is adapted to receive the information about the aligner shell material from the computer unit, to select the encoded aligner shell material from a storage and to place the aligner shell material at the deep draw station over the physical dental model. In combination with an automatic shell material feeding unit multiple very different materials can be processed and reliable and failure proof aligner sets can be assembled. The storage may comprise a single sheet material in a separate container and the feeding unit may take the sheet material from the storage place and convey the sheet to or directly place the sheet material into the deep draw chamber. The feeding unit may act via a suction device or, alternatively, by electrostatic forces. Furthermore, the feeding unit may comprise additional means for detecting the right placement of the aligner shell material on the model. In addition, the system may further comprise a heating unit, wherein the heating unit is adapted to heat the shell material prior to placing the shell material over the dental model.

In a preferred embodiment of the system, the system comprises a tagging unit, wherein the tagging unit is adapted to apply an individual tag on the orthodontic aligner after deep drawing. In order to designate the finally processed aligner shell to a certain application sequence or in order to individualize the aligner shell with respect to a certain patient, it has been found useful, that the system comprises a tagging unit. The tagging unit may print, or laser engrave the required information onto the aligner shell itself.

In a preferred embodiment of the system, the deep draw chamber comprises at least two independent operatable deep draw stations. The overall unit can easily process more than one aligner at once. Based on the identification of the right aligner shell material for the right model no mix up between processing parameters is possible and the added complexity does not result in higher mistakes or failures.

Further details, features and advantages of the subject matter of the invention will be apparent from the dependent claims and from the following description of the figures. The figures show a:
Fig. 1 schematic representation of a possible sequence of process steps according to the invention;
Fig. 2 schematic representation of a possible system according to the invention;
Fig. 3 schematic representation of a possible system according to the invention;
Fig. 4 schematic representation of a system according to the invention;
Fig. 5 schematic representation of a system according to the invention;
Fig. 6 schematic representation of a system according to the invention.

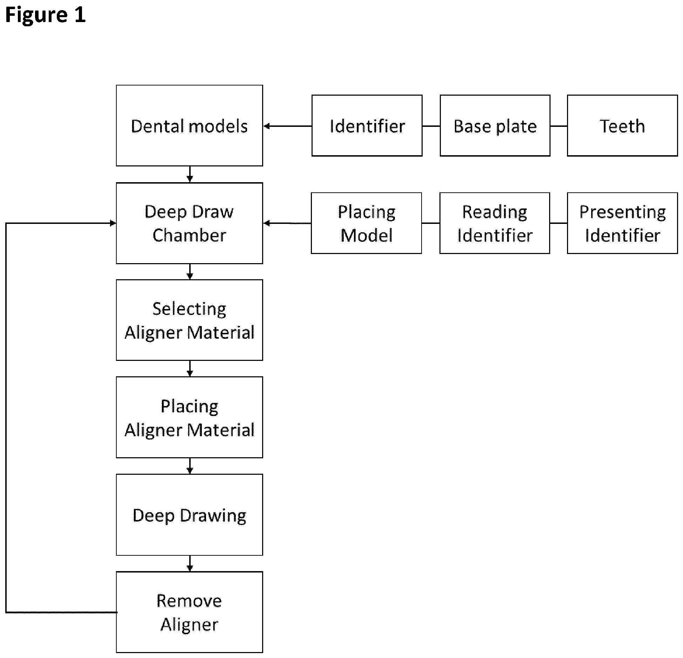

Figure 1 shows a possible process for the production of an orthodontic aligner set according to the invention. In the first process step a) at least two different physical dental models 1 are provided. The models 1 represent desired future teeth configurations in a patient's jaw and the dental models at least comprise a base plate and a teeth configuration on top of the base plate. Besides the teeth the model 1 may also comprise gum or other features of the patient's oral cavity. The baseplate may be flat on the lower side and may also comprise further patient's specific features on the upper side, wherein on the upper side the teeth are located. Each model 1 comprises an individual identifier 2, wherein the identifier 2 comprises information at least encoding for the specific patient and the aligner shell material 3. In process step b) the models 1 are consecutively or in parallel placed in a deep draw chamber 4. In between the process steps of providing the models 1 and placing the models 1 in the chamber 4 the identifier 2 is accessed or read from the model 1. This can be performed in a separate step c) or this step can be performed prior or simultaneously to placing the model 1 into the chamber 4. The accessed encoded information at least with respect to the aligner shell material 3 are presented in this step. In process step d) the specific aligner shell material 3 as represented by the encoded information in process step c) is selected, e.g. from a aligner shell material storage. In step e) the selected aligner shell material 3 is placed over the physical dental model 1 and the aligner foil or sheet are processed by deep-drawing. The processing might include heating of the aligner shell material 3, wherein the heating is performed prior, during or after placing of the selected aligner shell material 3, and deep drawing the aligner shell material 3 to the physical dental model 1 in order to produce a single orthodontic aligner. After the aligner shell is deep drawn over the physical model 1 the processed aligner is removed in process step f) from the dental model 1 and the orthodontic aligner from the deep draw chamber. The sequence is performed at least n-times, wherein n is a natural number and larger than 1, wherein in each repetition at least the process steps b) to f) are repeated until each physical dental model of the set is processed.

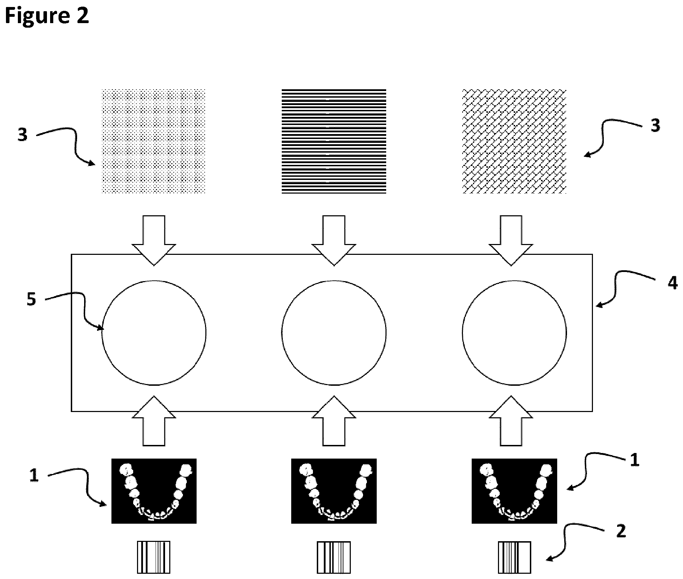

Figure 2 shows a preferred embodiment for a system for the production of an orthodontic aligner set according to the invention. In this figure a process for the simultaneous processing of three different aligner is displayed. In a first step different physical dental models 1 are provided. Each physical dental model 1 comprises an individual identifier 2, wherein the identifier 2 at least comprises information with respect to the specific aligner shell material 3 for this specific physical dental model 1. The identifier is read, e.g. by a camera, and the specific aligner shell material 3 for this model 1 is for instance displayed on a screen. The specific aligner shell material 3 is selected from a storage container, eventually heated, placed on the physical dental model 1 and is deep drawn. In one sequence several different aligners can be produced, wherein the different aligners may be formed from specific and different shell material 3. It is possible to simultaneously produce staged aligners, wherein the aligners may show different physical properties as a function of the shell material 3 or the processing. The selection and the placing of the aligner shell material 3 may be performed manually.

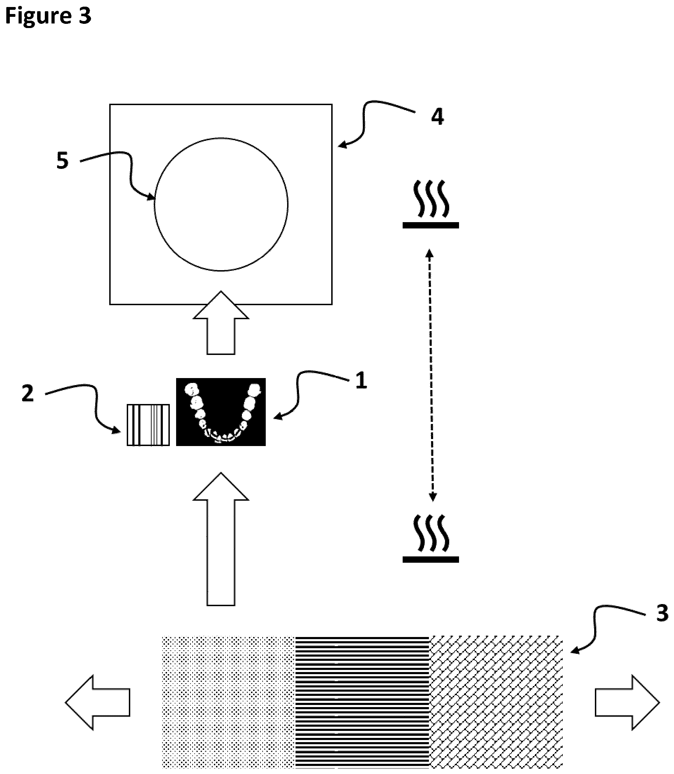

Figure 3 shows a further possible embodiment of a system for the production of an orthodontic aligner set according to the invention. Different aligner shell materials 3 may for instance be placed in a moveable storage. The individual identifier 2 on the dental model 1 is read and the information with respect to the right aligner shell material 3 is presented to the storage system. By moving the storage system, the right shell material 3 for the dental model 1 at hand can be selected. The shell material 3 is heated and placed over the dental model 1 in the deep draw chamber 4. Alternatively, it is also possible, that the shell material is placed above the dental model 1 and that the shell material 3 is heated in this position in the deep draw chamber 4. The heated shell material 3 is deep drawn above the dental model 1 and the aligner is formed. In this figure three separate deep draw places 5 are located within the same deep draw chamber 4. The aligner can be removed from the model 1 and further processed, if needed.

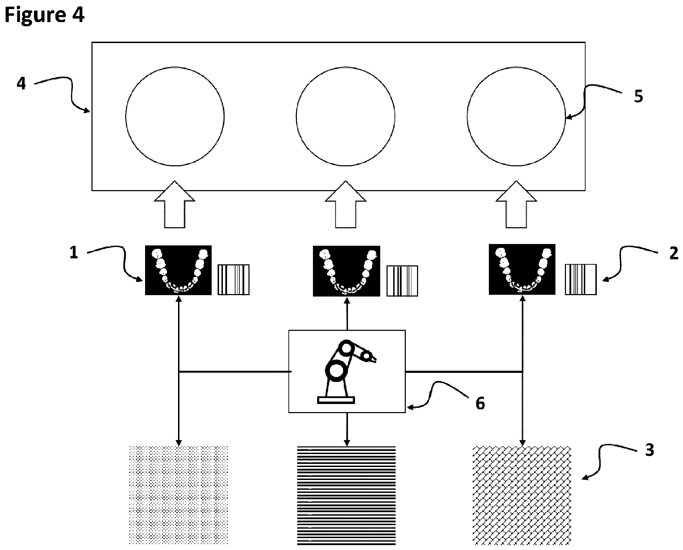

Figure 4 shows a further possible system for the production of an orthodontic aligner set according to the invention. Within this process the selection and the placing of the aligner shell material 3 is performed by a robotic arm 6. Different aligner shell materials 3 are stocked in different storage places. Based on the encoded information on the physical model 1 the right material can be chosen by the robotic arm 6 and the shell material 3 is placed over the right dental model 1. The shell material 3 is deep drawn, and the aligner is formed. This process sequence allows for the parallel and save processing of aligners comprising different physical characteristics based on different shell materials 3.

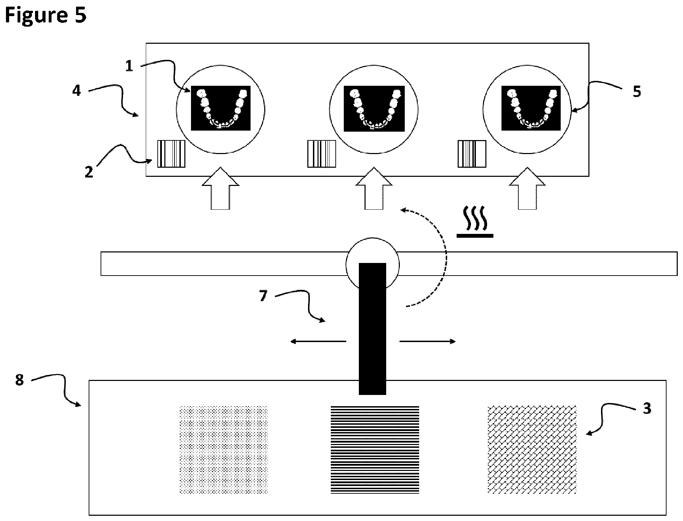

Figure 5 shows a further possible system for the production of an orthodontic aligner set according to the invention. Within this system the selection and the placing of the aligner shell material 3 is performed by an automatic placement unit 7. The automatic placement unit 7 is adapted to pick an aligner shell material 3 from a material specific storage 8. Different aligner shell materials 3 are stocked in different storage places in the material specific storage 8. Based on the encoded information on the physical model 1 the right material can be chosen by the automatic placement unit 7 and the aligner shell material 3 is placed over the right dental model 1. The shell material 3 is automatically heated to right temperature prior to the placement of the aligner shell material 3 over the model. The heated aligner shell material 3 is deep drawn, and the aligner is formed. This process sequence allows for the automatic, parallel and save processing of aligners comprising different physical characteristics based on different aligner shell material 3.

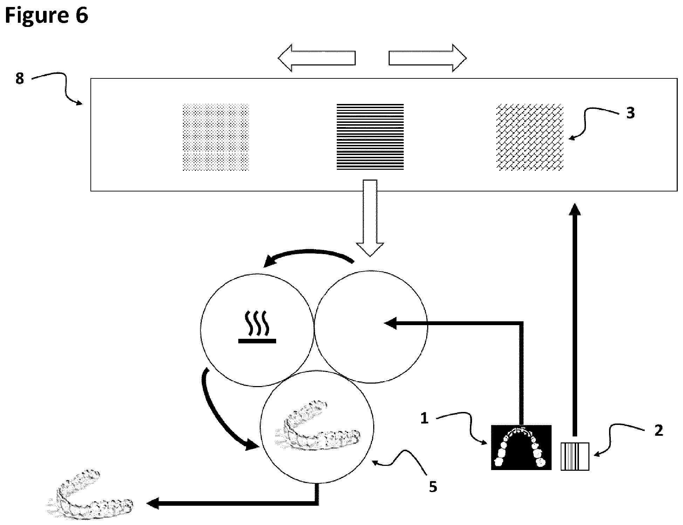

Figure 6 shows a further possible system for the production of an orthodontic aligner set according to the invention. Within this system different aligner shell materials 3 are stocked in different storage places in a material specific storage 8. The material specific storage 8 is moveable, wherein the right aligner shell material 3 for the specific dental model 1 is introduced into the process by moving the storage. The individual identifier 2 on the dental model 1 is read and the information with respect to the right aligner shell material 3 is presented to the storage system. By moving the storage system 8, the right shell material 3 for the dental model 1 at hand is selected. The dental model 1 is for instance placed in a rondel and the aligner shell material 3 is placed above the dental model 1. A rondel can be used, because in this case the requirements for the dimensions of the processing system are kept low. The rondel part can be moved to a second position, wherein the aligner shell material 3 is heated. After heating the aligner shell material 3, the heated aligner shell material 3 is deep drawn on a third rondel position. Based on the close proximity of the different stations a very fast processing is possible. The overall spatial dimensions of the machine are very small and a large throughput can be achieved. Such system is very safe, because each dental model 1 comprises the individual identifier 2, at least responsible for the selection of the right aligner shell material 3. In addition to the right aligner shell material 3 also further processing information like the heating cycle, the deep-draw parameters and a special post-processing can be included in the identifier 2. Such system set-up enables an automized, cost effective and safe processing of variable aligner shells.

## Claims

1. Process for the production of an orthodontic aligner set comprising at least two aligners of different aligner shell materials (3), wherein the process at least comprises the production steps of:
a) providing at least two different physical dental models (1), wherein the dental models (1) comprise a base plate and a teeth configuration thereon, wherein the teeth configuration defines at least a part of a patients present or future teeth configuration and each physical dental model (1) comprises an individual identifier (2) placed below the baseplate of the physical dental model (1), wherein the identifier (2) comprises information at least encoding for the specific patient and the aligner shell material (3);
b) placing at least one of the physical dental models (1) provided in step a) in a deep draw chamber (4);
c) Reading the individual identifier (2) on the physical dental model (1) by a camera unit, wherein the camera unit is adapted to a assess the identifier (2) from below the baseplate, and presenting at least the encoded information with respect to the aligner shell material, wherein the reading is performed after step a) and before step d);
d) Selecting the specific aligner shell material (3) as represented by the encoded information in process step c);
e) Placing the selected aligner shell material (3) over the physical dental model (1), heating of the aligner shell material (3), wherein the heating is performed prior, during or after placing of the selected aligner shell material (3), and deep drawing the aligner shell material (3) to the physical dental model (1) in order to produce a single orthodontic aligner;
f) Removing the dental model (1) and the orthodontic aligner from the deep draw chamber (4);
g) Repeating the process steps b) to f) until each physical dental model (1) of the set is processed.

2. Process according to claim 1, wherein the individual identifier (2) further encodes for one or more deep draw process parameters selected from the group consisting of heating temperature, heating time, applied pressure, process time under vacuum, post processing or a combination thereof.

3. Process according to any one of the preceding claims, wherein in process step e) the selected aligner shell material (3) is manually or automatically selected and placed on top of the physical dental model (1).

4. Process according to claim 3, wherein the selected aligner shell material (3) is placed in process step e) automatically on the physical dental model (1), wherein in process step d) the selection of the aligner shell material (3) includes the transfer of the specific aligner shell material (3) from a material specific storage according to the presented encoded aligner shell material information to the deep draw chamber (4) and onto the physical dental model (1) by a robotic arm (6).

5. Process according to any one of the preceding claims, wherein process step f) includes the attachment of an individual tag on the orthodontic aligner after deep drawing and prior to removing the orthodontic aligner from the deep draw chamber (4).

6. Process according to any one of the preceding claims, wherein the deep draw chamber (4) comprises at least two individually controllable deep draw stations (5), wherein the process steps b) to f) are performed simultaneously on different physical dental models (1) and the same or different aligner shell material (3) placed in process step e).

7. Process according to claim 6, wherein the simultaneous processing of different dental models (1) is performed automatically comprising at least an automatic selection and transfer of the specific aligner shell material (3) from a material specific storage (8) according to the presented encoded aligner shell material information to the deep draw station (5) and onto the different physical dental models (1) by a robotic arm (6).

8. Process according to any one of the preceding claims, wherein at least five different physical dental models (1) are processed and wherein for each physical dental model (1) different aligner shell materials (3) are processed in process steps d) to f).

9. System for the production of an aligner set comprising one or more orthodontic aligner, wherein the system at least comprises:
i) a physical dental model assembling unit, wherein the model assembling unit is adapted to consecutively assemble one or more dental models (1) at least each comprising a base plate and a teeth configuration thereon;
ii) an identification unit, wherein the identification unit is adapted to apply at least one identifier (2) on the physical dental model (1), wherein the identifier (2) comprises information at least encoding for a specific patient and an aligner shell material (3) and wherein the identification unit is adapted to apply at least one identifier (2) below the baseplate;
iii) a deep draw chamber (4), wherein the deep draw chamber (4) is adapted to assess the identifier (2) on the on the physical dental model (1), to present the encoded aligner shell material (3) gained from the identifier (2) and to deep draw the aligner shell material (3) at a deep draw station (5) over the physical dental model (1) in order to obtain an orthodontic aligner, wherein the deep draw chamber (4) comprises a camera unit and the camera unit is adapted to a assess the identifier (2) from below the baseplate of the physical dental model (1) and to present at least information about the aligner shell material (3);
iv) a disassembling unit, adapted to disassemble the orthodontic aligner from the physical dental model.

10. The system according to claim 9, wherein the system comprises a computer unit and an automatic aligner shell material feeding unit, wherein the computer unit is adapted to receive the information about the aligner shell material (3) from the camera unit, wherein the automatic aligner shell material feeding unit is adapted to receive the information about the aligner shell material (3) from the computer unit, to select the encoded aligner shell material (3) from a storage and to place the aligner shell material (3) at the deep draw chamber (4) over the physical dental model.

11. The system according to any one of claims 9 to 10, wherein the system comprises a tagging unit, wherein the tagging unit is adapted to apply an individual tag on the orthodontic aligner after deep drawing.

12. The system according to any one of claims 9 to 11, wherein the deep draw chamber (4) comprises at least two independent operatable deep draw stations (5).

## Patentansprüche

1. Verfahren zur Herstellung eines Sets kieferorthopädischer Aligner, umfassend mindestens zwei Aligner aus unterschiedlichen Aligner-Hüllenmaterialien (3), wobei das Verfahren wenigstens die Produktionsschritte umfasst:
a) bereitstellen von mindestens zwei unterschiedlichen physischen Zahnmodellen (1), wobei die Zahnmodelle (1) eine Basisplatte und eine darauf befindliche Zahnkonfiguration aufweisen, wobei die Zahnkonfiguration mindestens ein Teil einer aktuellen oder zukünftigen Zahnkonfiguration definiert und jedes physische Zahnmodell (1) umfasst eine unterhalb der Basisplatte angeordnete, individuelle Kennung (2), wobei die Kennung (2) Information umfasst, welche zumindest für den spezifischen Patienten und das Aligner-Hüllenmaterial (3) kodieren;
b) Einlegen mindestens eines der in Schritt a) bereitgestellten physischen Zahnmodelle (1) in eine Tiefziehkammer (4);
c) Auslesen der individuellen Kennung (2) auf dem physischen Zahnmodell (1) durch eine Kamera-Einheit, wobei die Kamera-Einheit dazu eingerichtet ist die Kennung (2) von unterhalb der Basisplatte auszulesen, und Anzeige wenigstens der kodierten Informationen bezüglich des Aligner-Hüllenmaterials (3), wobei das Auslesen nach Schritt a) und vor Schritt d) erfolgt;
d) Auswählen des spezifischen Aligner-Hüllenmaterials (3) gemäß der in Schritt c) angezeigten, kodierten Informationen;
e) Auflegen des ausgewählten Aligner-Hüllenmaterials (3) auf das physische Zahnmodell (1), Erhitzen des Aligner-Hüllenmaterials (3), wobei das Erhitzen vor, während oder nach dem Auflegen des ausgewählten Aligner-Hüllenmaterials (3) erfolgt, und Tiefziehen des Aligner-Hüllenmaterials (3) auf das physische Zahnmodell (1), um einen einzelnen kieferorthopädischen Aligner herzustellen;
f) Entnehmen des Zahnmodells (1) und des kieferorthopädischen Aligners aus der Tiefziehkammer (4);
g) Wiederholen der Prozessschritte b) bis f), bis jedes physische Zahnmodell (1) des Sets verarbeitet ist.

2. Verfahren nach Anspruch 1, wobei die individuelle Kennung (2) ferner einen oder mehrere Tiefziehprozessparameter kodiert, wobei die Tiefziehprozessparameter ausgewählt sind aus der Gruppe bestehend aus Heiztemperatur, Heizzeit, angelegtem Druck, Prozesszeit unter Vakuum, Nachbearbeitung oder einer Kombination davon.

3. Verfahren nach einem der vorhergehenden Ansprüche, wobei im Verfahrensschritt e) das ausgewählte Aligner-Hüllenmaterial (3) manuell oder automatisch ausgewählt und oben auf das physische Zahnmodell (1) gelegt wird.

4. Verfahren nach Anspruch 3, wobei das ausgewählte Aligner-Hüllenmaterial (3) in Verfahrensschritt e) automatisch auf das physische Zahnmodell (1) aufgelegt wird, wobei im Verfahrensschritt d) die Auswahl des Aligner-Hüllenmaterials (3) die Übertragung des spezifischen Aligner-Hüllenmaterials (3) aus einem materialspezifischen Lager gemäß den bereitgestellten, kodierten Aligner-Hüllenmaterialinformationen in die Tiefziehkammer (4) und auf das physische Zahnmodell (1) mittels eines Roboterarms (6) umfasst.

5. Verfahren nach einem der vorhergehenden Ansprüche, wobei der Verfahrensschritt f) das Anbringen eines individuellen Markers an dem kieferorthopädischen Aligner nach dem Tiefziehen und vor dem Entnehmen des kieferorthopädischen Aligners aus der Tiefziehkammer (4) umfasst.

6. Verfahren nach einem der vorhergehenden Ansprüche, wobei die Tiefziehkammer (4) mindestens zwei einzeln steuerbare Tiefziehstationen (5) umfasst, wobei die Prozessschritte b) bis f) gleichzeitig an verschiedenen physikalischen Zahnmodellen (1) und dem gleichen oder einem anderen Aligner-Hüllenmaterial (3) durchgeführt werden, welches im Prozessschritt e) platziert wurde.

7. Verfahren nach Anspruch 6, wobei die gleichzeitige Bearbeitung verschiedener Zahnmodelle (1) automatisch erfolgt, und die Bearbeitung umfasst mindestens eine automatische Auswahl und Übertragung des spezifischen Aligner-Hüllenmaterials (3) aus einem materialspezifischen Lager (8) gemäß der bereitgestellten kodierten Aligner-Hüllenmaterialinformationen zur Tiefziehstation (5) und aufbringen auf die verschiedenen physischen Zahnmodelle (1) mittels eines Roboterarms (6).

8. Verfahren nach einem der vorhergehenden Ansprüche, wobei mindestens fünf verschiedene physikalische Zahnmodelle (1) verarbeitet werden und für jedes physikalische Zahnmodell (1) verschiedene Aligner-Hüllenmaterialien (3) in den Verfahrensschritten d) bis f) verarbeitet werden.

9. System zur Herstellung eines Aligner-Sets, umfassend eine oder mehrere kieferorthopädischen Aligner, wobei das System mindestens Folgendes umfasst:
i) eine Montageeinheit für physische Zahnmodelle, wobei die Modell-Montageeinheit so eingerichtet ist, dass sie nacheinander ein oder mehrere Zahnmodelle (1) zusammenbaut, wobei die die Zahnmodelle (1) jeweils mindestens eine Grundplatte und eine darauf befindliche Zahnkonfiguration umfassen;
ii) eine Identifikationseinheit, wobei die Identifikationseinheit so eingerichtet ist, dass sie mindestens eine Kennung (2) auf dem physischen Zahnmodell (1) anbringt, wobei die Kennung (2) Informationen umfasst, die zumindest für einen bestimmten Patienten und ein Aligner-Hüllenmaterial (3) kodieren und wobei die Identifikationseinheit dazu eingerichtet ist, mindestens eine Kennung (2) unterhalb der Grundplatte anzubringen;
iii) eine Tiefziehkammer (4), wobei die Tiefziehkammer (4) so eingerichtet ist, dass diese die Kennung (2) auf dem physischen Zahnmodell (1) erfasst, das aus der Kennung (2) gewonnene kodierte Aligner-Hüllenmaterial (3) bereitstellt und das Aligner-Hüllenmaterial (3) an einer Tiefziehstation (5) über dem physischen Zahnmodell (1) tiefzieht, um einen kieferorthopädischen Aligner zu erhalten, wobei die Tiefziehkammer (4) eine Kamera-Einheit aufweist und die Kamera-Einheit dazu eingerichtet ist die Kennung (2) von unterhalb der Grundplatte des physischen Zahnmodells (1) zu erfassen und wenigstens Informationen über das Aligner-Hüllenmaterial (3) bereitzustellen;
iv) eine Demontageeinheit, die dazu eingerichtet ist, den kieferorthopädischen Aligner vom physischen Zahnmodell zu trennen.

10. Das System nach Anspruch 9, wobei das System eine Computer-Einheit und eine automatische Aligner-Hüllmaterial Zuführ-Einheit umfasst, wobei die Computer-Einheit dazu eingerichtet ist Informationen über das Aligner Hüllenmaterial (3) von der Kamera-Einheit zu erhalten, wobei die automatische Aligner-Hüllmaterial Zuführ-Einheit dazu eingerichtet ist die Informationen über das Aligner Hüllenmaterial (3) von der Computer-Einheit zu erhalten und das kodierte Aligner Hüllenmaterial (3) aus einem Lager auszusuchen und das Aligner Hüllenmaterial (3) an der Tiefziehkammer (4) über das physischen Zahnmodell (1) zu platzieren.

11. Das System nach einem der Ansprüche 9 bis 10, wobei das System eine Markiereinrichtung aufweist, wobei die Markiereinrichtung dazu eingerichtet ist, nach dem Tiefziehen eine individuelle Markierung auf den kieferorthopädischen Aligner aufzubringen.

12. Das System nach einem der Ansprüche 9 bis 11, wobei die Tiefziehkammer (4) mindestens zwei unabhängig voneinander steuerbare Tiefziehstationen (5) umfasst.

## Revendications

1. Procédé de fabrication d'un ensemble d'aligneurs orthodontiques comprenant au moins deux aligneurs constitués de matériaux de coque d'aligneur (3) différents, ledit procédé comprenant au moins les étapes de production suivantes:
a) la fourniture d'au moins deux modèles dentaires physiques (1) différents, dans lequel les modèles dentaires (1) comprennent une plaque de base et une configuration dentaire sur celle-ci, dans lequel la configuration dentaire définit au moins une partie de la configuration dentaire actuelle ou future d'un patient, et chaque modèle dentaire physique (1) comprend un identifiant individuel (2) placé sous la plaque de base du modèle dentaire physique (1), dans lequel l'identifiant (2) comprend des informations au moins relatives au codage pour le patient spécifique et le matériau de coque d'aligneur (3);
b) la mise en place d'au moins l'un des modèles dentaires physiques (1) fournis à l'étape a) dans une chambre d'emboutissage profond (4);
c) la lecture de l'identifiant individuel (2) sur le modèle dentaire physique (1) par une unité de caméra, dans lequel l'unité de caméra est conçue pour évaluer l'identifiant (2) depuis le dessous de la plaque de base, et la présentation des informations codées relatives au matériau de coque d'aligneur, dans lequel la lecture est effectuée après l'étape a) et avant l'étape d);
d) la sélection du matériau de coque d'aligneur (3) spécifique tel que représenté par les informations codées à l'étape c) du processus;
e) la mise en place du matériau de coque d'aligneur (3) sélectionné sur le modèle dentaire physique (1), le chauffage du matériau de coque d'aligneur (3), dans lequel le chauffage est effectué avant, pendant ou après la mise en place du matériau de coque d'aligneur (3) sélectionné, et l'emboutissage profond du matériau de coque d'aligneur (3) sur le modèle dentaire physique (1) afin de produire un seul aligneur orthodontique;
f) le retrait du modèle dentaire (1) et de l'aligneur orthodontique de la chambre emboutissage profond (4);
g) la répétition des étapes b) à f) du processus jusqu'à ce que chaque modèle dentaire physique (1) de l'ensemble soit traité.

2. Procédé selon la revendication 1, dans lequel l'identificateur individuel (2) code en outre pour un ou plusieurs paramètres de procédé d'emboutissage profond sélectionnés parmi le groupe constitué de la température de chauffage, du temps de chauffage, de la pression appliquée, du temps de traitement sous vide, du post-traitement ou d'une combinaison de ceux-ci.

3. Procédé selon l'une quelconque des revendications précédentes, dans lequel, à l'étape e) du processus, le matériau de coque d'aligneur (3) sélectionné est sélectionné manuellement ou automatiquement et placé sur le modèle dentaire physique (1).

4. Procédé selon la revendication 3, dans lequel le matériau de coque d'aligneur (3) sélectionné est placé automatiquement à l'étape e) du processus sur le modèle dentaire physique (1), dans lequel, à l'étape d) du processus, la sélection du matériau de coque d'aligneur (3) comprend le transfert du matériau spécifique de coque d'aligneur (3) à partir d'un stockage spécifique de matériau selon les informations codées présentées sur le matériau de coque d'aligneur, vers la chambre d'emboutissage profond (4) et sur le modèle dentaire physique (1) à l'aide d'un bras robotisé (6).

5. Procédé selon l'une quelconque des revendications précédentes, dans lequel l'étape f) du processus comprend la fixation d'une étiquette individuelle sur l'aligneur orthodontique après l'emboutissage profond et avant le retrait de l'aligneur orthodontique de la chambre d'emboutissage profond (4).

6. Procédé selon l'une quelconque des revendications précédentes, dans lequel la chambre d'emboutissage profond (4) comprend au moins deux stations d'emboutissage profond (5) contrôlables individuellement, dans lequel les étapes b) à f) du processus étant effectuées simultanément sur différents modèles dentaires physiques (1) et sur le même ou différent matériau de coque d'aligneur (3) placé à l'étape e).

7. Procédé selon la revendication 6, dans lequel le traitement simultané de différents modèles dentaires (1) est effectué automatiquement comprenant au moins une sélection et un transfert automatiques du matériau de coque d'aligneur (3) spécifique à partir d'un stockage spécifique de matériau (8) selon les informations codées présentées sur le matériau de coque d'aligneur vers la station d'emboutissage profond (5) et sur les différents modèles dentaires physiques (1) par un bras robotisé (6).

8. Procédé selon l'une quelconque des revendications précédentes, dans lequel au moins cinq modèles dentaires physiques (1) différents sont traités et dans lequel pour chaque modèle dentaire physique (1) différents matériaux de coque d'aligneur (3) sont traités dans les étapes d) à f) du processus.

9. Système de production d'un ensemble d'aligneurs comprenant un ou plusieurs aligneurs orthodontiques, dans lequel le système comprend au moins:
i) une unité d'assemblage de modèle dentaire physique, dans laquelle l'unité d'assemblage de modèle est conçue pour assembler de manière consécutive un ou plusieurs modèles dentaires (1) comprenant au moins chacun une plaque de base et une configuration dentaire sur celle-ci;
ii) une unité d'identification, dans laquelle l'unité d'identification est conçue pour appliquer au moins un identifiant (2) sur le modèle dentaire physique (1), dans laquelle l'identifiant (2) comprend des informations sur au moins un codage pour un patient spécifique et un matériau de coque d'aligneur (3) et dans laquelle l'unité d'identification est conçue pour appliquer au moins un identifiant (2) sous la plaque de base;
iii) une chambre d'emboutissage profond (4), dans laquelle la chambre d'emboutissage profond (4) est conçue pour évaluer l'identifiant (2) sur le modèle dentaire physique (1), pour présenter le matériau de coque d'aligneur (3) codé obtenu à partir de l'identifiant (2) et pour emboutir profondément le matériau de coque d'aligneur (3) dans une station d'emboutissage profond (5) sur le modèle dentaire physique (1) afin d'obtenir un aligneur orthodontique, dans laquelle la chambre d'emboutissage profond (4) comprend une unité de caméra et l'unité de caméra est conçue pour évaluer l'identifiant (2) depuis le dessous de la plaque de base du modèle dentaire physique (1) et pour présenter au moins des informations sur le matériau de la coque d'aligneur (3);
iv) une unité de désassemblage, conçue pour désassembler l'aligneur orthodontique du modèle dentaire physique.

10. Système selon la revendication 9, dans lequel le système comprend une unité informatique et une unité d'alimentation automatique en matériau de coque d'aligneur, dans lequel l'unité informatique étant conçue pour recevoir les informations sur le matériau de coque d'aligneur (3) à partir de l'unité de caméra, dans lequel l'unité d'alimentation automatique en matériau de coque d'aligneur est conçue pour recevoir les informations sur le matériau de coque d'aligneur (3) à partir de l'unité informatique, pour sélectionner le matériau de coque d'aligneur (3) codé à partir d'un stockage et pour placer le matériau de coque d'aligneur (3) dans la chambre d'emboutissage profond (4) au-dessus du modèle dentaire physique.

11. Système selon l'une quelconque des revendications 9 à 10, dans lequel le système comprend une unité d'étiquetage, dans lequel l'unité d'étiquetage est adaptée pour appliquer une étiquette individuelle sur l'aligneur orthodontique après un dessin profond.

12. Système selon l'une quelconque des revendications 9 à 11, dans lequel la chambre d'emboutissage profond (4) comprend au moins deux stations d'emboutissage profond (5) indépendantes et fonctionnelles.
